# EUROPÄISCHE PATENTSCHRIFT

(11) **EP 2 031 235 B1**
(45) Veröffentlichungstag und Bekanntmachung des Hinweises auf die Patenterteilung: **01.07.2015**
(21) Anmeldenummer: 08014834.9
(22) Anmeldetag: 21.08.2008
(51) Int. Cl.: F02M 25/07, F02C 3/34

(54) **Verfahren zur Leistungsregelung einer Kraft-Wärme-Kopplungsanlage**
Method for regulating the output of a combined heat and power plant
Procédé de réglage de puissance d'une installation de couplage force-chaleur

(30) Priorität: 27.08.2007 AT 13272007
(43) Veröffentlichungstag der Anmeldung: 04.03.2009
(73) Patentinhaber: Vaillant GmbH, 42859 Remscheid (DE)
(72) Erfinder: Forner, Pascal, 42855 Remscheid (DE); Link, Michael, 59590 Geseke (DE)
(74) Vertreter: Hocker, Thomas

(56) Entgegenhaltungen:
- EP-A2- 1 130 242
- WO-A1-01/81749
- WO-A1-02/38927
- WO-A1-98/25019
- DE-A1- 2 919 052

## Beschreibung

Die Erfindung bezieht sich auf ein Verfahren zur Leistungsregelung einer Kraft-Wärme-Kopplungsanlage, insbesondere des Verbrennungsmotors einer solchen Anlage.

Kraft-Wärme-Kopplungsanlagen, z.B. Blockheizkraftwerke sind Anlagen zur Erzeugung von elektrischem Strom und Wärme, wobei die bei der Stromerzeugung anfallende Abwärme zur Beheizung des Gebäudes oder zur Warmwasserbereitung genutzt wird. Als Antrieb für den Stromerzeuger der Anlage können Verbrennungsmotoren, z.B. Diesel- oder Gasmotoren, aber auch Gasturbinen verwendet werden.

Da eine direkte Messung der Leistung am Motor nicht möglich ist, wird diese aus dem gemessenen Drehmoment und der Motordrehzahl ermittelt. Die Veränderung des Drehmoments erfolgt bei Gas-Otto-Motoren durch die Verstellung einer Drosselklappe. Eine von einem Otto-Verbrennungsmotor angetriebene Anlage, deren Wärme aus dem Abgas und dem Kühlwasserkreislauf zur Aufheizung von Heizungswasser verwendet wird, wird üblicherweise bei konstanter Drehzahl betrieben. Durch Verwendung entsprechender elektrischer Generatoren wird der Strom erzeugt, der ohne Verwendung eines Frequenzwandlers in das elektrische Netz eingespeist wird. Die Leistungsregelung des Motors wird mit der Drosselklappe über die Menge des zugeführten Kraftstoff-LuftGemisches geregelt. Meistens wird auf diese Möglichkeit verzichtet, da durch die Drosselung der mechanische Wirkungsgrad des Motors und somit der elektrische Wirkungsgrad der Blockheizkraftwerkanlage stark verringert werden.

Eine andere Möglichkeit der Leistungsregelung besteht darin, die Drehzahl des Motors und damit die mechanische Leistung durch die Leistungsaufnahme des Generators einzustellen. Bei dieser Lösung bleiben der mechanische und elektrische Wirkungsgrad über einen großen Modulationsbereich annähernd gleich, wobei ein Frequenzwandler erforderlich ist, um den erzeugten Strom in das elektrische Netz einzuspeisen. Die Verwendung eines Frequenzwandlers ist aufgrund des aufwendigen Aufbaus jedoch kostenintensiv.

In dem DE 38 24 813 C2 ist ein Verfahren zum Betrieb einer Verbrennungsmotoren- und/oder Gasturbinenanlage mit einer zur Abgasnachbehandlung durch zusätzliche Verbrennung nachgeschalteten Kesselanlage bzw. Prozessofen beschrieben. Bei diesem Verfahren werden die Abgase zur Verminderung von NOx-Emissionen in den Motor zurückgeführt.

In der DE 29 190 52 A1 ist ein Verfahren zur Verbesserung des Teillastverhaltens einer Gasturbine mit Abgaswärmenutzung beschrieben, bei dem der thermische Wirkungsgrad im Teillastbereich verbessert wird.

Der Erfindung liegt die Aufgabe zugrunde, ein Verfahren zur Leistungsregelung eines Verbrennungsmotors einer Kraft-Wärme-Kopplungsanlage zur Verfügung zu stellen, bei dem durch die Nutzung von Abwärme einen verbesserten Wirkungsgrad im Teillastbereich erreicht wird.

Gelöst wird dies erfindungsgemäß nach den Merkmalen des Anspruchs 1 mit einem Verfahren zur Leistungsregelung eines Verbrennungsmotors einer Kraft-Wärme-Kopplungsanlage, welche Strom und Wärme produziert, mit einer Luft-Brenngas-Leitung zu dem Verbrennungsmotor, mit einem Generator zur Umsetzung der mechanischen Leistung des Verbrennungsmotors in elektrische Leistung, einer Abgasleitung, bei der die Luft-Brenngas-Leitung und die Abgasleitung über eine Abgasrückführungsleitung, in der sich eine Regelungsvorrichtung befindet, verbunden sind, wobei aus dem dem Verbrennungsmotor zugeführten Luft-Brenngas-Gemisch Abgas produziert wird und das Abgas über die Abgasleitung aus dem Verbrennungsmotor abgeführt wird, wobei dass zur Leistungsreduzierung ein Teil des abgeführten Abgases über die Abgasrückführungsleitung und die Regelvorrichtung in die Luft-Brenngas-Leitung dem Luft-Brenngas-Gemisch zugeführt wird.

Mit dem erfindungsgemäßen Verfahren wird einem Luft-Brenngas-Gemisch ein variabler Anteil an Abgas über eine Regelvorrichtung beigemischt. Dadurch kann die Leistung bei konstanter Drehzahl des Motors in einem weiten Bereich eingestellt werden, ohne dass es zu Drosselverluste kommt. Die Drehzahl kann so gewählt werden, dass die sonst übliche Verwendung eines kostspieligen, komplexen und dadurch anfälligen Frequenzwandlers entfällt.

Über die stufenlose oder abgestufte Anpassung des Drehmomentes arbeitet die Blockheizkraftwerkanlage bei der Leistungsregelung immer mit dem optimalen Wirkungsgrad und ermöglicht so deutlich längere Betriebszeiten sowie eine höhere Stromproduktion.

Weitere vorteilhafte Ausgestaltungen der Erfindung ergeben sich aus den Merkmalen der abhängigen Ansprüche und der Beschreibung.

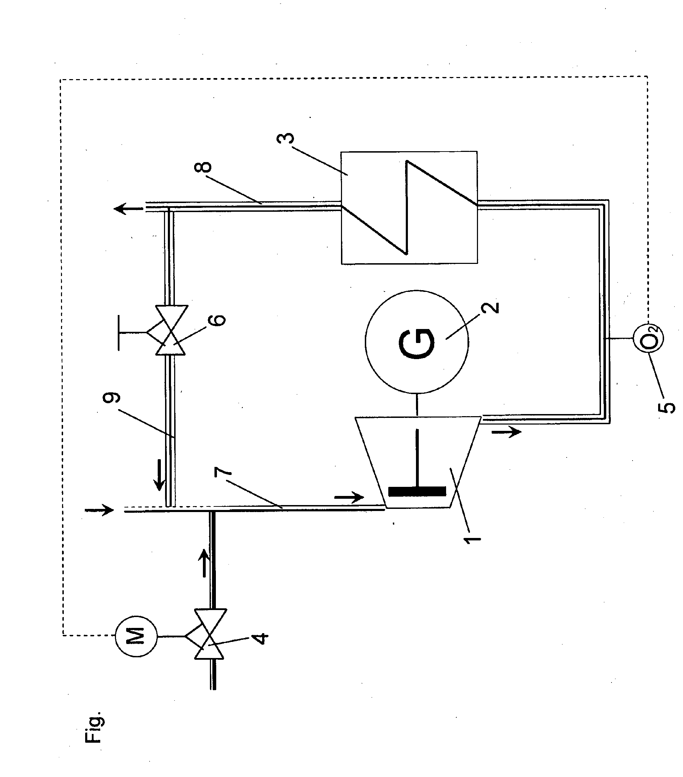

Die Erfindung wird nun anhand der Figur näher erläutert. Hierbei zeigt Figur 1 eine Blockheizkraftwerkanlage.

Gas-Ottomotoren haben im Gegensatz zu Dieselmotoren eine äußere Gemischbildung, d.h. das Brenngas wird in einem Mischer in Abhängigkeit der Luftansaugmenge angesaugt. Das genaue Verbrennungsluftverhältnis wird durch ein Regelventil in der Gaszufuhr eingestellt. Ein Sensor (Lambda-Sonde, die auch Sauerstoffsonde bzw. O₂-Sonde genannt wird) im Abgas erfasst den Istwert des Restsauerstoffs im Abgas. Eine Regelelektronik vergleicht den Ist-Wert mit einem Sollwert und gibt entsprechende Signale an das Regelventil aus.

Eine Verringerung der Motorleistung nur durch eine Reduktion der zugeführten Gasmenge würde im Bereich Lambda λ=1-1,4 sehr hohe Emissionen (insbesondere der NOx-Emissionen) des Motors verursachen, die auch bei einer üblichen Nachbehandlung des Abgases mit einem Katalysator zu nicht zulässigen Emissionen des Blockheizkraftwerkes führen würden.

Figur 1 zeigt eine Blockheizkraftwerkanlage mit einem Motor 1 und einem Generator 2, der die vom Motor erzeugte mechanische Leistung in elektrische Leistung umsetzt. Das erhitzte Abgas gelangt über eine Abgasleitung 8 vorzugsweise in einem Abgaswärmetauscher 3, wo es abgekühlt und anschließend in die Umwelt abgegeben wird. Die zugeführte Menge Brenngas (z.B. Erdgas, Biomasse) wird durch ein Regelventil 4 eingestellt. Ein Sensor 5 dient zur Bestimmung des im Abgas entstandenen Verhältnisses von Luft zu Brenngas. Das Regelventil 4 wird von dem Sensor 5 so angesteuert, dass ein festgelegter Anteil Sauerstoff im Abgas eingestellt wird. Zur Einstellung der Motorleistung wird dem abgekühlten Abgas eine Teilmenge entnommen und über eine Abgasrückführungsleitung 9, in der sich ein weiteres Regelventil 6 befindet, dem Luft-Brenngas-Gemisch zugeführt.

Die zuzuführende Abgasmenge über die Abgasrückführungsleitung 9 wird wie folgt bestimmt. Beim Überschreiten einer bestimmten elektrischen Leistung von der erzeugten elektrischen Leistung, wird der Abgas-Rückführungsvolumenstrom erhöht, indem das Regelventil 6 weiter geöffnet wird. Dabei kann die Abgasmenge der Luft oder dem Luft-Brenngas-Gemisch zugeführt werden.

Durch diese mengenvariable Abgasrückführung wird eine Leistungsmodulation, d.h. eine stetige Anpassung an den jeweiligen Verbrauch ohne lastabhängiges Zu- und Abschalten des Motors gewährleistet.

Auf den Sensor 5 kann auch optional verzichtet werden, da dieser für die Leistungsregelung nicht zwingend erforderlich ist. In diesem Fall wird die Menge des der Verbrennungsluft beigemischten Brenngases aus der Menge der bezogenen Luft bestimmt. Die Messung der Luftmenge muss dann vor der Einleitung des zurückgeführten Abgases, also stromaufwärts erfolgen.

Die Laufzeit von Blockheizkraftwerkanlagen wird häufig durch den Wärmebedarf der zu versorgenden Wärmesenken bestimmt. Durch den modulierenden Betrieb wird die Laufzeit einer solchen Anlage verlängert. Insbesondere bei Wohngebäuden wird auf diese Weise ein hoher Anteil an Eigenenergieerzeugung bei gleichzeitiger Geringhaltung der bezogenen Menge elektrischer Energie erreicht.

## Patentansprüche

1. Verfahren zur Leistungsregelung eines Verbrennungsmotors (1) einer Kraft-Wärme-Kopplungsanlage, welche Strom und Wärme produziert, mit einer Luft-Brenngas-Leitung (7) zu dem Verbrennungsmotor (1), mit einem Generator (2) zur Umsetzung der mechanischen Leistung des Verbrennungsmotors (1) in elektrische Leistung, einer Abgasleitung (8), bei der die Luft-Brenngas-Leitung (7) und die Abgasleitung (8) über eine Abgasrückführungsleitung (9), in der sich eine Regelvorrichtung (6) befindet, verbunden sind, wobei aus dem dem Verbrennungsmotor (1) zugeführten Luft-Brenngas-Gemisch Abgas produziert wird und das Abgas über die Abgasleitung (8) aus dem Verbrennungsmotor (1) abgeführt wird, **dadurch gekennzeichnet dass** zur Leistungsreduzierung ein Teil des abgeführten Abgases über die Abgasrückführungsleitung (9) und die Regelvorrichtung (6) in die Luft-Brenngas-Leitung (7) dem Luft-Brenngas-Gemisch zugeführt wird.

2. Verfahren zur Leistungsregelung des Verbrennungsmotors einer Kraft-Wärme-Kopplungsanlage nach Anspruch 1, **dadurch gekennzeichnet, dass** das dem Verbrennungsmotor (1) zugeführte Brenngas in Abhängigkeit des Signals des Sensors (5), angeordnet in der Abgasleitung (8), derart gesteuert wird, dass ein Istwert des Restsauerstoffs im Abgas erfasst wird, mit einem Sollwert verglichen wird und der Sollwert des Sauerstoffanteils im Abgas durch ein Signal an die Regelvorrichtung (4) eingestellt wird.

3. Verfahren zur Leistungsregelung des Verbrennungsmotors einer Kraft-Wärme-Kopplungsanlage nach Anspruch 1 oder 2, **dadurch gekennzeichnet, dass** ein Wärmetauscher (3) in der Abgasleitung (8) nach dem Verbrennungsmotor (1) vor der Abgasrückführungsleitung (9) angeordnet ist.

4. Verfahren zur Leistungsregelung des Verbrennungsmotors einer KraftWärme-Kopplungsanlage nach einem der Ansprüche 1 bis 3, **dadurch gekennzeichnet, dass** die Brenngaszufuhr in Abhängigkeit des Signals eines Sauerstoffsensors (5) angeordnet in der Abgasleitung (8) steuerbar ist.

## Claims

1. Method for the power control of a combustion engine (1) of a cogeneration plant which produces electricity and heat, having an air-fuel gas line (7) to the combustion engine (1), having a generator (2) for the conversion of the mechanical power of the combustion engine (1) into electrical power, an exhaust gas line (8), wherein the air-fuel gas line (7) and the exhaust gas line (8) are connected via an exhaust gas recirculation line (9) in which a control device (6) is located, wherein exhaust gas is produced from the air-fuel gas mixture supplied to the combustion engine (1) and the exhaust gas is discharged from the combustion engine (1) via the exhaust gas line (8), **characterised in that**, for the reduction of power, one part of the discharged exhaust gas is supplied to the air-fuel gas mixture in the air-fuel gas line (7) via the exhaust gas recirculation line (9) and the control device (6).

2. Method for the power control of the combustion engine of a cogeneration plant according to claim 1, **characterised in that** the fuel gas supplied to the combustion engine (1) is controlled depending on the signal of the sensor (5), arranged in the exhaust gas line (8), in such a way that an actual value of the residual oxygen in the exhaust gas is detected, is compared to a target value and the target value of the oxygen proportion in the exhaust gas is set by a signal to the control device (4).

3. Method for the power control of the combustion engine of a cogeneration plant according to claim 1 or 2, **characterised in that** a heat exchanger (3) is arranged in the exhaust gas line (8) after the combustion engine (1) before the exhaust gas recirculation line (9).

4. Method for the power control of the combustion engine of a cogeneration plant according to one of claims 1 to 3, **characterised in that** the fuel gas supply is able to be controlled depending on the signal of an oxygen sensor (5) arranged in the exhaust gas line (8).

## Revendications

1. Procédé de réglage de la puissance d'un moteur à combustion (1) d'un dispositif de couplage chaleur-force qui produit du courant et de la chaleur, avec un conduit air/gaz (7) vers le moteur à combustion (1), avec un générateur (2) conçu pour convertir la puissance mécanique du moteur à combustion (1) en puissance électrique, un conduit de gaz d'échappement (8), auquel le conduit air/gaz (7) et le conduit de gaz d'échappement (8) sont reliés par un conduit de recyclage des gaz d'échappement (9), dans lequel se trouve un système de réglage (6), le gaz d'échappement du mélange air/gaz du moteur à combustion (1) provenant dudit système et le gaz d'échappement étant évacué du moteur à combustion (1) par le conduit de gaz d'échappement (8), **caractérisé en ce que**, pour réduire la puissance, une partie du gaz d'échappement évacué est amené via le conduit de recyclage du gaz d'échappement (9) et le système de réglage (6) dans le conduit air/gaz (7) au mélange air/gaz.

2. Procédé de réglage de la puissance du moteur à combustion d'un dispositif de couplage chaleur-force selon la revendication 1, **caractérisé en ce que** le gaz amené au moteur à combustion (1) est réglé en fonction du signal du capteur (5), disposé dans le conduit de gaz d'échappement (8), de sorte qu'une valeur réelle de l'oxygène restant dans le gaz est relevée, comparée avec une valeur théorique et la valeur théorique de la proportion d'oxygène dans le gaz est réglée par un signal envoyé au dispositif de réglage (4).

3. Procédé de réglage de la puissance du moteur à combustion d'un dispositif de couplage chaleur-force selon la revendication 1 ou 2, **caractérisé en ce qu'**un échangeur de chaleur (3) est disposé dans le conduit de gaz d'échappement (8) derrière le moteur à combustion (1) devant le conduit de recyclage des gaz (9).

4. Procédé de réglage de la puissance du moteur à combustion d'un dispositif de couplage chaleur-force selon l'une quelconque des revendications 1 à 3, **caractérisé en ce que** l'arrivée de gaz est réglable en fonction du signal d'un capteur d'oxygène (5) disposé dans le conduit de gaz d'échappement (8).
